# DEMANDE DE BREVET EUROPEEN

(11) **EP 2 169 911 A1**
(43) Date de publication de la demande: **31.03.2010**
(21) Numéro de dépôt: 09170307.4
(22) Date de dépôt: 15.09.2009
(51) Int. Cl.: H04L 29/08

(54) **Procédé permettant la communication interopérable entre communautés réelles et virtuelles**

(30) Priorité: 26.09.2008 FR 0805332
(71) Demandeur: Alcatel Lucent, 75008 Paris (FR)
(72) Inventeur: Papillon,Serge, 91620 Nozay (FR); Squedin, Sylvain, 91620 Nozay (FR)
(74) Mandataire: Hedarchet, Stéphane

(57) **Abrégé**

Procédé d'établissement d'une communication entre un appelant et un appelé par l'intermédiaire d'agents utilisateurs connectés à des réseaux de communication (30) ayant une unité (50) de contrôle , procédé comprenant les étapes suivantes :
- récupérer une session de communication initialisée par l'appelant et contrôlée par l'unité de contrôle, cette session comprenant une requête d'initialisation formulée par un agent utilisateur correspondant à l'appelant et à destination de l'appelé ;
- déterminer, à partir de la requête d'initialisation, un identifiant correspondant à l'appelé et le format de la communication ;
- à partir de cet identifiant et en fonction d'au moins un critère prédéterminé, sélectionner parmi une liste prédéterminée d'agents utilisateurs correspondant à l'appelé, un agent utilisateur exploitable ;
- adapter la session initialisée par l'appelant à l'agent utilisateur sélectionné, en au moins,
• convertissant l'identifiant utilisé par l'appelant pour désigner l'appelé en un identifiant compatible avec l'agent utilisateur sélectionné ;
• convertissant le format de communication utilisé par l'appelant en un format de communication supporté par l'agent utilisateur sélectionné ;
• reformuler la session initialisée à l'aide de l'identifiant et du format de communication ainsi convertis ;

- renvoyer à l'unité de contrôle la session de communication ainsi adaptée.

## Description

La présente invention concerne le domaine des applications de communications multimodales mises en oeuvre dans les réseaux de télécommunications. En particulier, elle a pour objet un procédé ainsi qu'un système de communication interopérable entre les plateformes de communication qui interconnectent des terminaux tel qu'ordinateurs, terminaux mobiles (téléphones mobiles, Portable Digital Assistants, etc.), terminaux fixes (téléphones fixes, fax, etc.) ou autres.

Créée par un ou plusieurs administrateurs, une communauté virtuelle, également dénommée communauté en ligne, désigne un groupement d'utilisateurs au sein d'un réseau qui partagent généralement un intérêt, un objet ou une passion. A titre d'exemple, on peut citer les communautés virtuelles des forums, des blogs, des jeux en ligne, ou encore des messageries instantanées.

L'objet d'une communauté peut être d'ordre social, commercial ou éducatif. Tout utilisateur intéressé par cet objet peut se joindre à la communauté et ainsi interagir avec des personnes ayant des intérêts similaires. En effet, une communauté virtuelle permet à chacun de ses membres de se connecter et d'interagir avec d'autres membres de son choix. Un exemple d'interactivité consiste à communiquer ou partager des contenus. Un utilisateur peut, à titre d'exemple, participer à des jeux en ligne, charger des articles, des photos, des chansons et des vidéos, ou encore initier une communication textuelle, vocale ou visuelle.

Le nombre de communautés virtuelles, et leur population, ne cessent de croître. A titre d'exemple non exhaustif, les jeux en lignes massivement multi-joueurs forment des communautés de plusieurs centaines de milliers, voire de millions de membres. Il s'agit d'un univers accessible simultanément, via un réseau, par un très grand nombre de joueurs. Ces communautés évoluent de façon indépendante et tendent à s'étendre au fur et à mesure que s'accroît la disponibilité d'accès au réseau.

Du point de vue de l'utilisateur, l'interactivité au sein d'une communauté virtuelle - c'est-à-dire la possibilité pour l'utilisateur de communiquer au sein de la communauté - suppose que l'utilisateur en soit membre. Les communications inter-communautés ne sont pas nécessairement possibles. Il existe toutefois des plateformes qui supportent conjointement un certain nombre (fini) de communautés virtuelles. A titre d'exemple, citons la plateforme de Trillian qui est capable de se connecter à des plateformes de messageries instantanées différentes telle que MSN, Yahoo et ICQ, par nature incompatibles. On parle, dans ce cas, d'intra-interactivité de communautés virtuelles.

L'identification au sein des communautés virtuelles est généralement administrée par des alias, également dénommés pseudonymes ou logins. Ces derniers sont choisis par l'utilisateur et ils ne caractérisent ni ne dévoilent pas nécessairement (et, en pratique, généralement pas) l'identité réelle de l'utilisateur. De fait, l'une de leurs fonctions est de préserver l'anonymat de l'utilisateur, qui peut d'ailleurs posséder plusieurs alias. Ces identifiants sont généralement visibles par les autres membres de la communauté et, au sein des communautés, ne sont pas considérés comme des données privées.

L'alias peut prendre plusieurs formes telle qu'une chaîne de caractères, un symbole, un avatar, une icône, ou encore une image.

Parallèlement, le développement et l'élargissement de la couverture des technologies de télécommunications dans le monde réel (communications mobiles ; communications fixes) engendrent aussi une croissance du nombre de communautés réelles et de la population de ces communautés mais, comparativement aux communautés virtuelles, cette croissance est beaucoup plus faible.

L'interactivité au sein des communautés réelles met généralement en oeuvre des identifiants privés qui dévoilent ou, à tout le moins, caractérisent, l'identité de leur propriétaire : numéro de téléphone, numéro de fax, nom, prénom, adresse IP ou adresse mail. Un exemple d'interactivité au sein des communautés réelles consiste à établir une communication vocale, visuelle ou textuelle entre deux ou plusieurs membres.

Il a été constaté qu'un nombre grandissant d'utilisateurs ressentent un besoin d'interactivité entre communautés virtuelles et réelles, quelques soient leurs types.

Pourtant, une interactivité étendue (inter-communautés) pose plusieurs problèmes.

Le premier est d'ordre moral. Les membres des communautés virtuelles se méfient en effet de la diffusion de leurs données privées (notamment le numéro de téléphone fixe/mobile, le nom ou l'adresse mail). Les utilisateurs sont par conséquent réticents (ce qui contredit leurs besoins) à demander que soit permise une telle communication inter-communautés.

Le deuxième, d'ordre technique, réside dans l'incompatibilité entre plateformes et protocoles des communications (mobile, fixe, IP). Citons à titre d'exemple les plateformes des jeux en ligne et les plateformes des communications fixes.

Des solutions ont néanmoins été proposées.

Ainsi, le document US 2008/052363 décrit un système de messagerie interopérable qui permet de communiquer un message instantané textuel avec ou sans un attachement audio/vidéo (message MSN, message AOL, SMS, MMS, ...) entre différentes plateformes de messagerie et entre des terminaux fixes et mobiles. Ce système procède à une adaptation du message à envoyer au système de réception (porteuse, forme, etc.). Cette interactivité inter-communautés est réalisée d'une manière différée.

Les procédés et systèmes de ce type, utilisés à l'heure actuelle, sont imparfaits notamment en raison de l'absence d'un système interopérable entre toutes les plateformes de communications textuelles et audiovisuelles, qui serait capable de raccorder toutes les communautés virtuelles et réelles tout en veillant à la confidentialité des identifiants privées des utilisateurs.

Les objectifs visés par l'invention, réalisés individuellement ou conjointement pour remédier aux inconvénients précités, sont les suivants :
- s'affranchir de la distinction entre communautés virtuelles et communautés réelles, et donc à permettre d'initialiser une communication entre toutes les plateformes de communication, peu important le format de communication qu'elles supportent ou la nature de communautés qu'elles engendrent. En d'autres termes, permettre la convergence des communautés ;
- favoriser une interactivité en temps réel entre les membres des communautés virtuelles et réelles en utilisant les formats et les plateformes de communication adéquats pour établir cette interactivité ;
- garantir une interactivité sécurisée entre les communautés virtuelles et réelles, c'est-à-dire établir une communication sans diffuser les identifiants privés des utilisateurs (à titre d'exemple, établir une communication téléphonique, qui nécessite un identifiant privé, en utilisant un identifiant public tel qu'un alias) ;
- permettre l'établissement systématique d'une communication entre un appelant et un destinataire.

A cette fin, l'invention se rapporte, selon un premier aspect, à un procédé d'établissement d'une communication entre un appelant et un appelé par l'intermédiaire d'agents utilisateurs connectés à des réseaux de communication ayant une unité de contrôle , procédé qui comprend les étapes suivantes :
- récupérer une session de communication initialisée par l'appelant et contrôlée par l'unité de contrôle correspondant, cette session comprenant une requête d'initialisation formulée par un agent utilisateur correspondant à l'appelant et à destination de l'appelé ;
- déterminer, à partir de la requête d'initialisation, un identifiant correspondant à l'appelé et le format de la communication ;
- à partir de cet identifiant et en fonction d'au moins un critère prédéterminé, sélectionner parmi une liste prédéterminée d'agents utilisateurs correspondant à l'appelé, un agent utilisateur exploitable ;
- adapter la session initialisée par l'appelant à l'agent utilisateur sélectionné, en au moins,
   - convertissant l'identifiant utilisé par l'appelant pour désigner l'appelé en un identifiant compatible avec l'agent utilisateur sélectionné ;
   - convertissant le format de communication utilisé par l'appelant en un format de communication supporté par l'agent utilisateur sélectionné ;
   - reformuler la session initialisée à l'aide de l'identifiant et du format de communication ainsi convertis ;
- renvoyer à l'unité de contrôle la session de communication ainsi adaptée.

L'invention se rapporte, selon un deuxième aspect, à un système d'établissement d'une communication entre un appelant et un appelé par l'intermédiaire d'agents utilisateurs connectés à des réseaux de communication ayant une unité de contrôle, ce système comprenant les modules suivants :
- Un module de récupération d'une session initialisée par l'appelant et contrôlée par l'unité de contrôle, dès lors qu'est formulée par un agent utilisateur correspondant à l'appelant une requête d'initialisation d'une session de communication à destination de l'appelé et comprenant un identifiant correspondant à celui-ci ;
- Un module de sélection, à partir de l'identifiant contenu dans la requête d'initialisation de la session de communication et en fonction d'au moins un critère prédéterminé, d'un agent utilisateur exploitable, parmi une liste prédéterminée d'agents utilisateurs correspondant à l'appelé;
- Un module d'adaptation de la session initialisée par l'appelant à l'agent utilisateur sélectionné pour, au moins,
   - convertir l'identifiant utilisé par l'appelant pour désigner l'appelé en un identifiant compatible avec l'agent utilisateur sélectionné ;
   - convertir le format de communication utilisé par l'appelant en un format de communication supporté par l'agent utilisateur sélectionné ;
   - reformuler la session initialisée à l'aide de l'identifiant et du format de communication ainsi convertis ;
- Un module de renvoi de la session de communication adaptée à l'unité de contrôle.

L'invention se rapporte, selon un troisième aspect, à un produit programme d'ordinateur implémenté sur un support mémoire, susceptible d'être mis en oeuvre au sein d'une unité de traitement informatique et comprenant des instructions pour la mise en oeuvre du procédé résumé ci-dessus.

L'invention permet d'établir une communication entre plusieurs plateformes de communication qui engendrent des communautés virtuelles et réelles. Elle permet notamment de s'affranchir de l'incompatibilité entre les plateformes des communications.

En outre, la présente invention permet à un membre d'une communauté A d'établir une communication avec un autre membre d'une communauté B dont il connaît son identifiant dans une communauté C. C peut être A ou B ou toute autre communauté (A, B et C étant des communautés de nature différente (virtuelle, réelle) et supportant des formats de communication différents (texte, audio, vidéo)).

D'autres caractéristiques et avantages de l'invention apparaîtront plus clairement et de manière complète à la lecture de la description ci-après d'une variante préférée de mise en oeuvre du procédé et de réalisation du système, laquelle est faite en référence aux dessins annexés dans lesquels :
- La figure 1 représente, à titre illustratif, l'intégration de la présente invention dans une architecture générale du réseau télécom ;
- La figure 2 représente une représentation fonctionnelle, non limitative du système de l'invention.

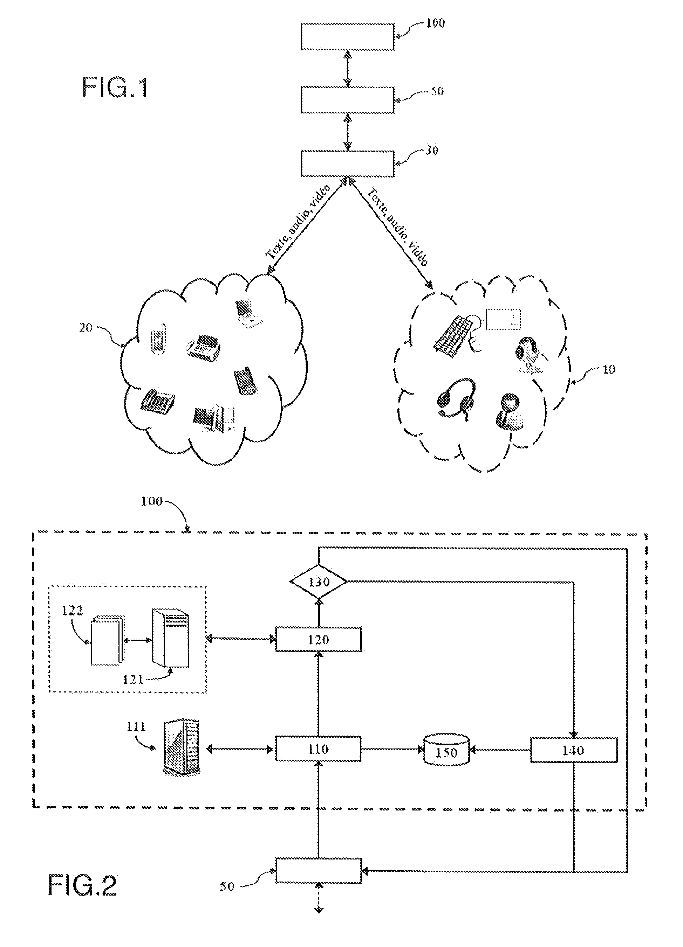

On a représenté sur la figure 1 un ensemble de communautés virtuelles 10 et un ensemble de communautés réelles 20 qui supportent différents formats de communications tels qu'une communication textuelle, une communication vocale, une communication visuelle ou toute combinaison des ces dernières. A titre d'exemple, un agent utilisateur de type une messagerie instantanée permet d'établir une communication texte-audio-vidéo, un autre agent utilisateur permettant d'établir une communication audiovisuelle.

Les communautés virtuelles 10 et réelles 20 peuvent être interconnectées au moyen d'un système de communication comprenant un ou plusieurs points d'accès 30, un ou plusieurs unités 50 de contrôle, ainsi qu'un ou plusieurs modules d'harmonisation 100 des communications.

Les requêtes de communications des agents utilisateurs sont envoyées/reçues à travers les points d'accès 30 de différents réseaux de communications sans-fil ou filaires. A titre d'exemple, chaque point d'accès 30 comprend des connexions à un réseau ADSL, à un réseau WLAN, à un réseau GSM, à un réseau PSTN, etc.

Chaque point d'accès 30 réalise une interface entre les agents utilisateurs et l'unité 50 de contrôle des réseaux de communications.

L'unité 50 de contrôle est une entité qui permet aux agents utilisateurs de se « voir » (c'est-à-dire d'avoir la possibilité d'interagir) mutuellement et négocier les caractéristiques d'une session de communication qu'ils veulent partager. Cette unité 50 est notamment de type Call/Session Control Function (CSCF) supportant le protocole SIP (Session Initialisation Protocol).

L'unité 50 de contrôle comprend, en pratique, des serveurs d'application, qui communiquent avec le module d'harmonisation 100, dont l'architecture interne est détaillée sur la figure 2.

Le système 100 comprend, en premier lieu, un analyseur 110 de format de communication, permettant de déterminer l'identifiant du destinataire, spécifier le format de la communication initialisée, et identifier sa plateforme source. A titre d'exemple, l'analyseur 110 permet de distinguer une communication écrite provenant d'un serveur mail et adressé à l'identifiant «+33112345678 », une communication vocale provenant d'un réseau de télécommunication mobile/fixe et adressée à l'identifiant «exemple@gmail.com », une communication écrite provenant d'un serveur administrant un jeu ou un forum et adressée à l'identifiant « joueur1 », une communication audiovisuelle provenant d'un serveur de messagerie instantané et adressé à l'identifiant « +33612345678 ». Dans ce but, l'analyseur 110 est assisté par une base de données 150. Cette dernière comprend une métadonnée étendue de tous les formats et plateformes de communications. La base de données 150 est mise à jour régulièrement dans le but d'ajouter tout nouveau format de communication et d'enregistrer toute modification au niveau des formats de communications supportés par les plateformes de communication. À titre d'exemple, il peut s'agir d'une application de messagerie qui intègre la communication audiovisuelle ou un réseau de télécommunication mobile qui offre le service d'une communication vidéo. On notera que l'analyseur 110 n'apporte aucune modification à la session de communication initialisée par l'appelant.

Le système 100 de communication comprend, en second lieu, un module 120 programmé pour associer, de façon réciproque, l'identifiant d'un utilisateur dans une communauté à son identifiant dans une autre communauté. À titre d'exemple non limitatif, le module 120, ci-après dénommé DAS (Domain Alias System), par analogie au DNS (Domain Name System), permet d'associer un alias à un numéro de téléphone et inversement, une adresse mail à un numéro de téléphone et inversement, un alias à une adresse mail et inversement, un alias à un autre alias, etc. En particulier, le DAS 120 permet de faire le lien entre les identifiants privés d'un utilisateur et ses identifiants publics et inversement.

Le système 100 de communication comprend, en troisième lieu, un serveur de présence 121 relié au module d'association et permettant d'indexer la liste des agents utilisateurs exploitables, c'est-à-dire dont l'utilisateur correspondant peut être considéré - ou décrété - joignable. Différentes méthodes sont possibles pour réaliser cette indexation, à titre d'exemple :
- l'agent utilisateur signale sa connexion au serveur de présence 121,
- le serveur de présence 121 consulte régulièrement l'état de l'agent utilisateur,
- le serveur de présence 121 consulte des entités intermédiaires du réseau, susceptibles de renvoyer une information sur l'accessibilité de l'agent utilisateur.

Le serveur de présence 121 récupère aussi des informations complémentaires sur chaque agent utilisateur tel que son état (occupé, libre, en veille, etc.), sa version, ses modules complémentaires, l'état actuel de ses différents modules (son activé/désactivé, carte graphique activé/désactivé, etc.).

Un serveur 122 de profils utilisateurs est relié au serveur de présence 121 pour permettre la prise en compte éventuelle de préférences enregistrées par chaque utilisateur. Ainsi, un profil utilisateur comprend par exemple :
- la liste des couples (agent utilisateur, identifiant) qu'un utilisateur possède,
- la liste des identifiants publics et des identifiants privés,
- la liste ordonnée des agents utilisateurs sur lesquels l'utilisateur préfère être joint,
- la liste des communautés qui ne peuvent pas le joindre via une liste d'agents utilisateurs,
- le format de communication dans le cas où un agent utilisateur supporte plus d'un format de communication.

D'une manière avantageuse, le serveur 122 de profils utilisateurs peut être configuré automatiquement ou personnalisé par les utilisateurs eux-mêmes. Un utilisateur peut en outre avoir plusieurs profils. A titre d'exemple, un utilisateur peut avoir un profil « maison », un profil « travail », profil « compétition », profil « week-end », etc.

Sur la base de l'identifiant fourni par l'analyseur 110, du profil utilisateur fourni par le serveur 122 de profils, et des informations de présence fournies par le serveur de présence 121, le DAS 120 effectue la sélection de l'agent utilisateur exploitable s'il en existe, et l'identifiant correspondant.

Le système 100 de communication comprend par ailleurs un module 140 d'adaptation des formats de communication, qui assure la conversion du format de la communication initialisée dans un format de communication supporté par l'agent utilisateur sélectionné par le DAS, pour permettre une réception correcte, par l'agent utilisateur appelé, de la session initialisée par l'appelant. A titre d'exemple, l'agent utilisateur utilisé par l'appelant peut être un téléphone (fixe ou mobile) tandis que l'agent utilisateur sélectionné par le DAS est un forum de discussion.

Le module 140 permet de convertir le contenu de la session de communication, par exemple de l'audio vers du texte, du texte vers de l'audio, d'une vidéo vers des images extraites d'une vidéo, d'une vidéo vers de l'audio, etc. Cette fonction de conversion peut être mise en oeuvre à l'aide de produits du commerce, tel que Text To Speech, édité par Oddcast. Le module 140 permet également d'adapter la session de communication aux caractéristiques de l'agent utilisateur récepteur (forme, protocole, etc.). Le module 140 est relié à la base de données 150 pour adapter la session de communication initialisé par l'agent utilisateur appelant à l'agent utilisateur appelé.

La session de communication ainsi adaptée à l'agent utilisateur récepteur est alors transmise à l'unité 50 de contrôle.

Il est à noter que la liste des agents utilisateurs sélectionnés peut se révéler vide, dans l'hypothèse par exemple où l'appelé ne peut être joint par aucun moyen, ou lorsque ses préférences ne correspondent à aucun agent utilisateur exploitable.

Un module de test 130 vérifie la liste des agents utilisateurs sélectionnés. Si la liste est vide, la session renvoyée à l'unité 50 est identique à la session de communication initialement récupérée.

Avantageusement, le DAS 120 permet, en tenant compte à la fois des critères de présence et des critères de préférence utilisateur, de sélectionner plus d'un agent utilisateur récepteur.

In fine, on étend ainsi l'interaction au niveau des communautés elles-mêmes.

Dans le cas où cette interactivité est un service payant, le module d'analyse 110 est connecté à un serveur de facturation 111, qui peut autoriser plusieurs modes de paiement.

Le système 50 qui vient d'être décrit permet ainsi d'établir une communication entre un appelant et un appelé.

D'abord, la session de communication initialisée par l'appelant et contrôlée par l'unité de contrôle correspondant est récupérée par le module 110 pour être ensuite analysée par celui-ci.

L'analyse aboutit à la détermination de l'identifiant correspondant à l'appelé et du format de la communication.

À partir de ces informations, et en fonction d'au moins un critère prédéterminé (en l'occurrence la présence de l'utilisateur appelé, combinée à ses préférences), le DAS 120 effectue la sélection, parmi la liste d'agents utilisateurs correspondant à l'appelé, d'au moins un agent utilisateur exploitable.

La session est ensuite adaptée par le module 140 à l'agent utilisateur ainsi sélectionné, puis elle est renvoyée à l'unité de contrôle pour la mise en communication effective des agents utilisateurs de l'appelant et de l'appelé.

Bien que le système 100 de communication tel qu'il vient d'être décrit est séparé de l'unité 50 de contrôle, il peut être intégré au moins partiellement dans un serveur d'applications au sein de celle-ci.

## Revendications

1. Procédé d'établissement d'une communication entre un appelant et un appelé par l'intermédiaire d'agents utilisateurs connectés à des réseaux de communication (30) ayant une unité (50) de contrôle , procédé **caractérisé en ce qu'**il comprend les étapes suivantes :
- récupérer une session de communication initialisée par l'appelant et contrôlée par l'unité de contrôle, cette session comprenant une requête d'initialisation formulée par un agent utilisateur correspondant à l'appelant et à destination de l'appelé ;
- déterminer, à partir de la requête d'initialisation, un identifiant correspondant à l'appelé et le format de la communication ;
- à partir de cet identifiant et en fonction d'au moins un critère prédéterminé, sélectionner parmi une liste prédéterminée d'agents utilisateurs correspondant à l'appelé, un agent utilisateur exploitable ;
- adapter la session initialisée par l'appelant à l'agent utilisateur sélectionné, en au moins,
• convertissant l'identifiant utilisé par l'appelant pour désigner l'appelé en un identifiant compatible avec l'agent utilisateur sélectionné ;
• convertissant le format de communication utilisé par l'appelant en un format de communication supporté par l'agent utilisateur sélectionné ;
• reformuler la session initialisée à l'aide de l'identifiant et du format de communication ainsi convertis ;
- renvoyer à l'unité de contrôle la session de communication ainsi adaptée.

2. Procédé selon la revendication 1, **caractérisé en ce que** la conversion de l'identifiant est réalisée au moyen d'un système d'association (120) programmé pour convertir tout identifiant relatif à un agent utilisateur de la liste en tout autre identifiant correspondant à un autre agent utilisateur de la même liste.

3. Procédé selon l'une des revendications 1 à 2, **caractérisé en ce qu'**il comprend une étape d'indexation, au moyen d'un serveur de présence (121), de la liste des agents utilisateurs de sorte à y identifier un sous-ensemble d'agents utilisateurs exploitables.

4. Procédé selon l'une des revendications 1 à 3, **caractérisé en ce que** la sélection de l'agent utilisateur récepteur de la session initialisée par l'appelant tient compte de préférences du destinataire.

5. Procédé selon l'une quelconque des revendications 1 à 4, **caractérisé en ce que** lorsqu'aucun agent utilisateur ne peut être sélectionné, la session initialement récupérée est renvoyée à l'unité de contrôle sans aucune modification.

6. Système d'établissement d'une communication entre un appelant et un appelé par l'intermédiaire d'agents utilisateurs connectés à des réseaux de communication (30) ayant une unité (50) de contrôle , ledit système comprenant les modules suivants :
- Un module de récupération d'une session initialisée par l'appelant et contrôlée par l'unité de contrôle, dès lors qu'est formulée par un agent utilisateur correspondant à l'appelant une requête d'initialisation d'une session de communication à destination de l'appelé et comprenant un identifiant correspondant à celui-ci ;
- Un module de sélection, à partir de l'identifiant contenu dans la requête d'initialisation de la session de communication et en fonction d'au moins un critère prédéterminé, d'un agent utilisateur exploitable, parmi une liste prédéterminée d'agents utilisateurs correspondant à l'appelé ;
- Un module d'adaptation de la session initialisée par l'appelant à l'agent utilisateur sélectionné pour, au moins,
• convertir l'identifiant utilisé par l'appelant pour désigner l'appelé en un identifiant compatible avec l'agent utilisateur sélectionné ;
• convertir le format de communication utilisé par l'appelant en un format de communication supporté par l'agent utilisateur sélectionné ;
• reformuler la session initialisée à l'aide de l'identifiant et du format de communication ainsi convertis ;
- Un module de renvoi de la session de communication adaptée à l'unité de contrôle.

7. Système selon la revendication 6, **caractérisé en ce qu'**il comprend un Domain Alias Server (120) programmé pour convertir tout identifiant relatif à un agent utilisateur de la liste en tout autre identifiant correspondant à un autre agent utilisateur de la même liste.

8. Système selon la revendication 8, **caractérisé en ce qu'**il comprend un serveur de présence (121) programmé pour indexer la liste des agents utilisateurs afin d'identifier le sous-ensemble des agents utilisateurs qui sont joignables au moment de l'initialisation de la session.

9. Produit programme d'ordinateur implémenté sur un support mémoire, susceptible d'être mis en oeuvre au sein d'une unité de traitement informatique et comprenant des instructions pour la mise en oeuvre d'un procédé selon l'une des revendications 1 à 5.
